# EUROPÄISCHE PATENTSCHRIFT

(11) **EP 1 004 197 B1**
(45) Veröffentlichungstag und Bekanntmachung des Hinweises auf die Patenterteilung: **17.04.2002**
(21) Anmeldenummer: 98948710.3
(22) Anmeldetag: 03.08.1998
(51) Int. Cl.: H04N 1/00

(54) **VERFAHREN ZUR SYNCHRONISIERUNG AUF DEN TRÄGER EINES QPSK-SIGNALS**
METHOD FOR SUPPORTING SIMPLE SYNCHRONIZATION ON THE CARRIER OF AN ENERGY DISPERSED QPSK SIGNAL
PROCEDE POUR FACILITER LA SYNCHRONISATION SIMPLE SUR LA PORTEUSE D'UN SIGNAL MDPQ DE DISPERSION D'ENERGIE

(30) Priorität: 04.08.1997 DE 19733732
(43) Veröffentlichungstag der Anmeldung: 31.05.2000
(73) Patentinhaber: Infineon Technologies AG, 81669 München (DE)
(72) Erfinder: KLUGE, Götz, D-81737 München (DE)
(74) Vertreter: Banzer, Hans-Jörg, Dipl.-Ing.
(86) Internationale Anmeldenummer: DE9802220
(87) Internationale Veröffentlichungsnummer: WO9908437

(56) Entgegenhaltungen:
- US-A- 4 470 018
- US-A- 4 570 125
- US-A- 4 687 999
- US-A- 4 958 360

## Beschreibung

Die vorliegende Erfindung betrifft ein Verfahren zum Synchronisieren eines Empfangsträgers auf einen Sendeträger eines energieverwischten QPSK-Signals gemäß dem Oberbegriff von Anspruch 1.

Die Erfindung liegt allgemein auf dem Gebiet digitaler Modulationsverfahren, wie beispielsweise dem als DVB-S (DVB-S = Digital Video Broadcast via Satellite)-Verfahren. Insbesondere betrifft die vorliegende Erfindung die Trägerrückgewinnung beim Empfang eines gesendeten digitalen Signals, vorliegend eines energieverwischten QPSK-Signals (QPSK = Quadrature Phase Shift Keying). Bei einem QPSK-Signal handelt es sich um das Mischprodukt aus zwei orthogonalen Signalen I und Q (nachfolgend I-Signal bzw. Q-Signal genannt), die um 90° zueinander phasenverschoben sind. Diese I- und Q-Signale sind auch empfangsseitig vollständig voneinander unabhängig, wenn der Empfangsträger und der Sendeträger frequenzgleich und phasengekoppelt sind.

Empfangsseitig wird das QPSK-Signal in einem Pfad mit einem TI-Trägersignal gemischt, um das I-Signal zu erhalten, und in einem weiteren Pfad mit einem TQ-Trägersignal, um das Q-Signal zu erhalten, das 90° phasenverschoben zu dem Trägersignal TI ist. Die Frequenz des empfangsseitigen Trägersignals muß genau der Frequenz des senderseitigen Trägersignals entsprechen, um eine synchrone Demodulation des energieverwischten QPSK-Signals zu gewährleisten. Nicht übereinstimmende Trägerfrequenzen führen zu einer Rotation der aus dem I-Signal und dem Q-Signal bestehenden Konstellation. Diese Rotation wird durch eine geeignete Steuerung des Empfangsträgers zum Stillstand gebracht oder in modernen Verfahren durch rechnerische Verfahren (z.B. CORDIC-Algorithmus) kompensiert. Das erfindungsgemäße Verfahren kann hier über eine vergleichsweise einfache Schaltung mit dem theoretisch möglichen Minimum an Meßwerten direkt in analogen QPSK-Demodulatoren eingesetzt werden oder in numerischen QPSK-Prozessoren den Steuerwert für die Rotations-Kompensation ermitteln.

Eine bekannte Vorgehensweise zur Trägerrückgewinnung im Rahmen digitaler Modulationsverfahren ist beispielsweise bekannt aus "Digitale Modulationsverfahren", Rudolf Mäusl, 1985/1991, ISBN 3-7785-2085-X. Im Kapitel 3.4.2 beschreibt dieser Autor unter "Trägerrückgewinnung" die sogenannte COSTAS-Schleife. Ausgehend von der im Bild 3.12 gezeigten Schaltung besteht die COSTAS-Schleife zur Rückgewinnung des Trägers bei der Zweiphasenumtastung in einer Erweiterung mit einem zweiten Multiplizierer. Den beiden Multiplizierern wird in der Variante der sogenannten "harten" COSTAS-Schleife am einen Eingang das Demodulationsprodukt des In-Phase- bzw. Quadratur-Demodulators nach einer Tiefpaßfilterung und am anderen Eingang über Kreuz das mittels eines Komparators auf das Vorzeichen begrenzte Demodulationsprodukt zugeführt. Aus der Differenz der beiden Multipliziererausgangssignale erhält man eine Korrekturspannung zur Steuerung des spannungsgesteuerten Oszillators. Diese bekannte Schaltung ist symmetrisch, d.h. basiert sowohl auf einer SI-gesteuerten Erfassung des vollständigen SQ-Signales wie auch einer SQ-gesteuerten Erfassung des vollständigen SI-Signales.

Zum Stand der Technik ist außerdem noch zu nennen: "Pulse Code Modulation Techniques", Bill Waggener, 1995, ISBN 0-442-01436-8. Im Kapitel "Symbol Synchronization", Seiten 291 bis 306 sind verschiedene komplizierte Konzepte für die Impulscodemodulation aufgeführt, die ebenfalls im zuvor beschriebenen Sinn symmetrisch sind und auf der Messung der Gesamtsignale basiert.

Eine Aufgabe der vorliegenden Erfindung besteht darin, ein im Oberbegriff des Anspruchs 1 genanntes Verfahren so auszugestalten, daß es ohne großen Aufwand, auch in bauteilemäßiger Hinsicht durchgeführt werden soll. Außerdem soll eine ohne großen Bauteileaufwand realisierbare Vorrichtung zur Durchführung dieses Verfahrens bereitgestellt werden.

Gelöst wird diese Aufgabe hinsichtlich des Verfahrens durch die kennzeichnenden Merkmale des Anspruchs 1 und hinsichtlich der Vorrichtung durch die Merkmale des Anspruchs 4.

Der Erfindung liegt folgende Erkenntnis zugrunde: Bei einer Frequenzverschiebung bzw. Frequenzablage zwischen dem senderseitigen Trägersignal und dem empfangsseitigen Trägersignal rotieren die orthogonalen I- und Q-Signale des QPSK-Signals; d.h. das I-Signal und das Q-Signal haben Komponenten in den empfangsseitigen SI- und SQ-Signalen. Dem auf der Energieverwischung basierenden Pseudozufallssignal im SQ-Signal ist damit eine um 90° verschobene Komponente des SI-Signals überlagert, die ihren Wendepunkt, d.h. ihr positives oder negatives Maximum zum Zeitpunkt des Nulldurchgangs der ansteigenden Flanke des SI-Signals hat. Der Betrag dieses Werts steigt mit wachsender Frequenzablage. Dasselbe gilt für das SI-Signal. Demnach ist dem Pseudozufallssignal in dem SI-Signal eine um 90° verschobene Komponente des SQ-Signals überlagert, deren SQ-Mittelwert zum Zeitpunkt des Nulldurchganges der ansteigenden Flanke des SI-Signales ungleich Null ist und sich als ein positives oder negatives Maximum des Mittelwertes (im Vergleich zu zu anderen Zeitpunkten gebildeten Mittelwerten) ausbildet. Der Betrag des aus diesen Werten gebildeten Mittelwertes steigt mit wachsender relativer Frequenzablage. (Die relative Frequenzablage DF ist die durch die Symbolrate geteilte absolute Frequenzablage. Der Betrag des Mittelwertes errechnet sich aus der Fehlerfunktion erf(DF).).

Die Erfindung macht sich diese Erkenntnis dadurch zu eigen, daß der Mittelwert des SQ-Signals zum Zeitpunkt des Nulldurchgangs der ansteigenden Flanke des SI-Signals bzw. die Amplitude des SI-Signals zum Zeitpunkt des Nulldurchgangs der abfallenden Flanke des SQ-Signals als Maß für die Abweichung von der Synchronität zwischen dem Empfangsträger und dem Sendeträger gemessen bzw. erfaßt wird, wobei die Frequenz des Empfangsträgers solange variiert wird, bis diese Amplitude Null ist, wodurch der Empfangsträger auf dem Sendeträger des energieverwischten QPSK-Signals synchronisiert wird.

Das erfindungsgemäße Verfahren dagegen benötigt nur das theoretische Minimum an Meßwerten einer Komponente des Signalpaares, deren Erfassung durch die andere Komponente des Signalpaares gesteuert wird. Der erfindungsgemäße Lösungsvorschlag erfordert kein gleichzeitig erforderliches von SQ gesteuertes Erfassen von SI und von SI gesteuertes Erfassen von SQ mit einem symmetrischen Aufbau des Synchronisierers, sondern begnügt sich nur mit der Erfassung des von SI gesteuerten SQ (oder des von SQ gesteuerten SI). Der aufwendigere symmetrische Aufbau ist Stand der Technik sowohl bei digitalen wie auch bei analogen Verfahren.

Zur Demonstration ist das erfindungsgemäße Verfahren zur Abstimmung des Senders auf den Empfänger problemlos mit Hilfe eines Oszilloskops durchführbar, an welches das Empfangssignal angelegt ist, und von dessen Bildschirm die Nullabweichung der Amplitude des SQ-Signals bzw. des SI-Signals ermittelt und durch Regelung der Empfangsträgerfrequenz zu Null gemacht wird, um Synchronität herzustellen.

In einer praktisch ausgeführten Demodulationsschaltung ist es auch möglich, die Abweichung des SI-Signals bzw. des SQ-Signals vom Wert Null einer Taktrückgewinnungseinrichtung eines QPSK-Decoders zur Ermittlung eines Startwerts für eine nachgeschaltete Trägerrückgewinnungseinrichtung zuzuführen, um eine sehr schnelle Einstellung der Taktrückgewinnungsseinrichtung zu ermöglichen.

Die erfindungsgemäße Vorrichtung zur Durchführung des erfindungsgemäßen Verfahrens weist in an sich bekannter Weise einen QPSK-Demodulator auf, der eingangsseitig basierend auf einem Oszillator ein TI-Trägersignal und ein um 90° hierzu phasenverschobenes TQ-Trägersignal erzeugt, die über Mischstufen mit dem empfangenen QPSK-Signal gemischt werden, um ein SI-Signal und ein SQ-Signal zu gewinnen, die orthonogal zueinander sind. Die Besonderheit der erfindungsgemäßen Vorrichtung besteht in einer Synchronisiereinrichtung, die eine Triggerschaltung aufweist, die vom SI-Signal beaufschlagt ist, eine Sample-And-Hold-Schaltung, die vom SQ-Signal und vom Ausgangssignal der Triggerschaltung beaufschlagt ist, und einer Mittelwertbildungsschaltung, die vom Ausgangssignal des Sample-And-Hold-Schaltung beaufschlagt ist, und deren Ausgangssignal als Stellsignal in den Oszillator über einen Tiefpaß (zur Mittelwertbildung) eingespeist werden kann, bei dem es sich beispielsweise um einen spannungsgesteuerten Oszillator handelt. In digitalen Systemen kann die Synchronisierungseinrichtung bestehend aus Trigger, Sample-and Hold-Schaltung und Tiefpaß auch einem Derotator (CORDIC) folgen, den Fehler im unkorrigierten Zustand ermitteln und dann über die Fehlerfunktion erf(DF) wesentlich verbesserte Parameter für den Derotator liefern. So wird die Rotation der QPSK-Konstellation sehr schnell fehlergesteuert zum Stillstand gebracht, während Suchverfahren mit Rotationsfrequenzänderungen in konstanten Schrittweiten hier noch Stand der Technik sind.

Nachfolgend wird die Erfindung anhand der Zeichnung beispielhaft näher erläutert. Es zeigen:
- Fig. 1: schematisch ein Blockschaltbild eines Sende/Empfangssystems für ein energieverwischtes QPSK-Signal, und
- Fig. 2-4: graphische Darstellungen des zeitlichen Verlaufs der Mittelwerte der SI- und SQ-Signal-Amplituden bei Vorliegen von Synchronität (Fig. 3) bzw. Asynchronität (Fig. 3 und 4) der Sende- und Empfangsträger eines energieverwischten QPSK-Signals.

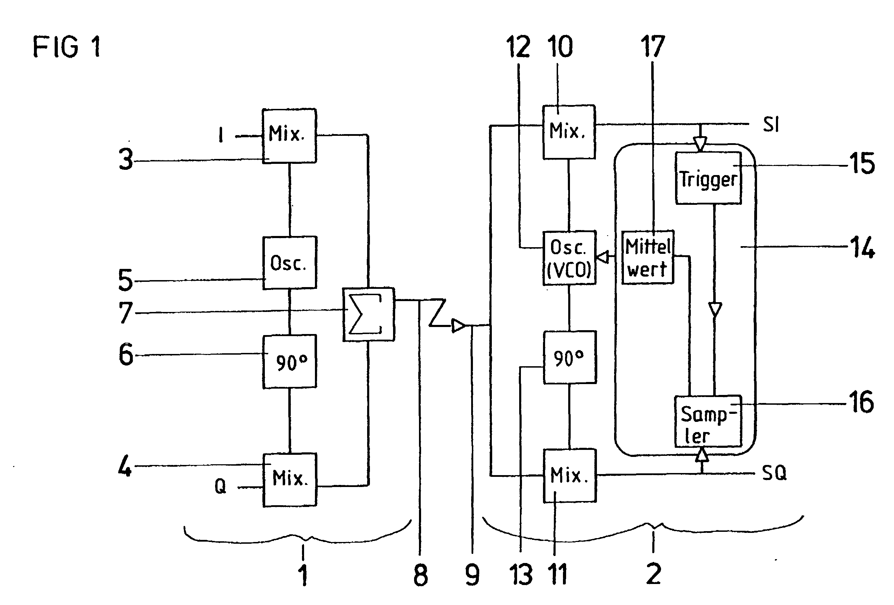

Das in Fig. 1 gezeigte Sende/Empfangssystem besteht aus einem allgemein mit der Bezugsziffer 1 bezeichnetem Sender und einem allgemein mit der Bezugsziffer 2 bezeichneten Empfänger 2. Dargestellt ist jeweils schematisch die Ausgangsstufe des Senders 1 und die Eingangsstufe des Empfängers 2.

Das in Fig. 1 gezeigte Sende/Empfangssystem dient zur Übertragung energieverwischter QPSK-Signale mittels eines Trägers. Zur Erzeugung von QPSK-Signalen und eines Trägersignals weist der Sender 1 eine erste Mischstufe 3 auf, die von einem I-Signal beaufschlagt ist, eine zweite Mischstufe 4, die von einem Q-Signal beaufschlagt ist, einem Oszillator 5 zur Erzeugung eines Trägersignals, der mit der ersten Mischstufe 3 direkt verbunden ist, um den Träger mit dem I-Signal zu modulieren, und eine Phasenschieberstufe 6, über welcher der Oszillator 5 mit der zweiten Mischstufe 4 verbunden ist, um den Träger mit dem Q-Signal zu modulieren. Die Ausgänge der ersten Mischstufe 3 und der zweiten Mischstufe 4 sind über eine Summenbildungsstufe 7 miteinander verbunden, an deren Ausgang das zu sendende QPSK-Signal anliegt. Die Summenbildungsstufe 7 ist ausgangsseitig an eine Antenne 8 angeschlossen, die das QPSK-Signal zum Sender 2 ausstrahlt, die eine Empfangsantenne 9 aufweist.

Die Eingangsstufe des Empfängers 2 ist ähnlich aufgebaut wie die Ausgangsstufe des Senders 1 und weist demnach eine dritte Mischstufe 10, eine vierte Mischstufe 11 und einen Oszillator 12 auf, der mit der dritten Mischstufe 10 direkt und mit der vierten Mischstufe 11 unter Zwischenschaltung einer Phasenschieberstufe 13 verbunden ist und zur Demodulation des QPSK-Signals in ein SI-Signal und ein SQ-Signal ein Trägersignal erzeugt, das als TI-Trägersignal an der dritten Mischstufe 10 und als TQ-Trägersignal an der vierten Mischstufe 11 anliegt. Die dritte und vierte Mischstufe 10 und 11 sind außerdem mit der Empfangsantenne 9 verbunden.

Erfindungsgemäß weist der Empfänger 2 eine Synchronisiereinheit 14 auf, die eine Triggerschaltung 15, eine Sample-And-Hold-Schaltung 16 und eine Mittelwertbildungsschaltung 17 aufweist. Der Eingang der Triggerschaltung 15 ist mit dem das SI-Signal führenden Ausgang der Mischstufe 10 verbunden. Der Eingang der Sample-And-Hold-Schaltung ist mit dem des SQ-Signal führenden Ausgang der Mischstufe 11 verbunden. Der Steuereingang der Sample-And-Hold-Schaltung 16 ist mit dem Ausgang des Triggers 15 verbunden und der Ausgang der Sample-And-Hold-Schaltung 16 ist mit dem Eingang der Mittelwertschaltung verbunden, deren Ausgang mit dem Steuereingang des Oszillators 12 verbunden ist, der als VCO bzw. spannungsgesteuerter Oszillator gebildet ist.

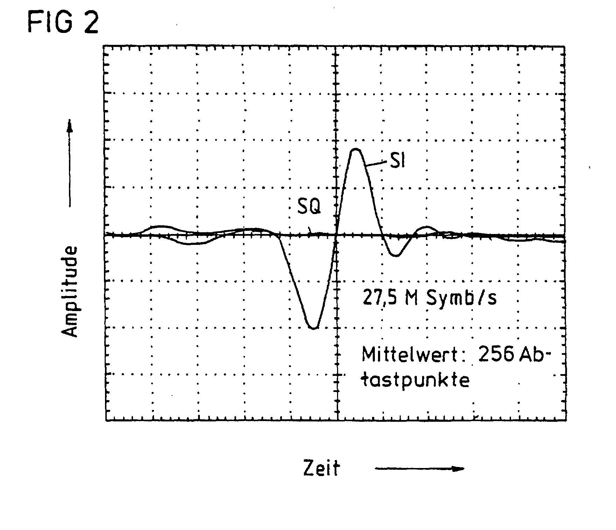

Die Arbeitsweise des in Fig. 1 gezeigten Sende/Empfangssystems wird nunmehr anhand der Figuren 2 bis 4 erläutert, die Amplituden/Zeitdiagramme der Mittelwerte der SI- bzw. SQ-Signale zeigen.

Für den Fall, demnach das vom Oszillator 12 erzeugte empfangsseitige Trägersignal bezüglich seiner Frequenz mit dem durch den senderseitigen Oszillator 5 erzeugte Trägersignal übereinstimmt (die beiden Trägersignale sind synchron zueinander) ist eine Demodulation des QPSK-Signals in empfangsseitige SI- und SQ-Signale gewährleistet. Dieser Fall ist in Fig. 2 gezeigt, demnach das SQ-Signal zum Zeitpunkt des Nulldurchgangs der ansteigenden Flanke des SI-Signals den Amplitudenwert Null hat. Eine Nachregelung der Frequenz des Oszillators 12 erübrigt sich in diesem Fall.

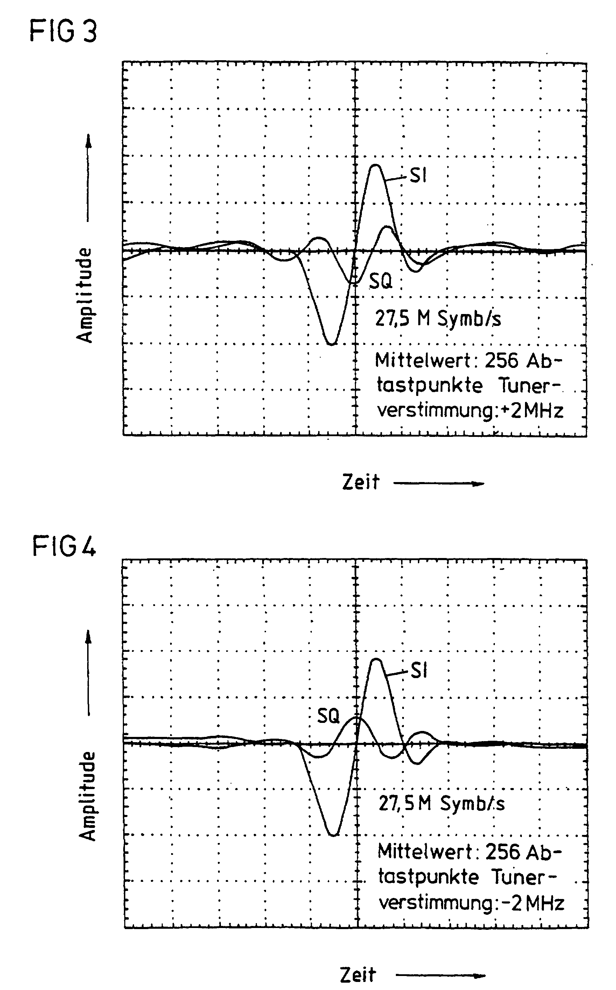

In Fig. 3 und 4 ist derjenige Fall gezeigt, demnach die sender- und empfangsseitigen Trägerfrequenzen nicht synchron sind; d.h. die SI- und SQ-Signale enthalten aufgrund einer Rotation der I- und Q-Signale Komponenten der I- bzw. Q-Signale, was dazu führt, daß das SQ-Signal zum Zeitpunkt des Nulldurchgangs der ansteigenden Flanke des SI-Signals eine Amplitude ungleich Null aufweist, nämlich in Fall von Fig. 3 eine negative Amplitude entsprechend einer Trägerverstimmung von +2 MHz und im Fall von Fig. 4 eine positive Amplitude entsprechend einer Trägerverstimmung von -2 MHz. Diese Amplituden, die ein Maß für die Frequenzverschiebung zwischen dem empfangs- und senderseitigen Trägersignalen sind, werden durch die Synchronisiereinrichtung 14 in einen Mittelwert überführt, der den Oszillator 12 nachregelt, bis die positive bzw. negative Amplitude des Q-Signals zum Zeitpunkt des Nulldurchgangs der ansteigenden Flanke des SI-Signals verschwindet bzw. Null wird, wie in Fig. 2 gezeigt.

## Patentansprüche

1. Verfahren zum Synchronisieren eines Empfangsträgers auf einen Sendeträger eines energieverwischten QPSK-Signals, das als Mischprodukt aus einem I-Signal und einem um 90° gegenüber diesem phasenverschobenen Q-Signal mit dem Sendeträger gesendet wird, aus denen empfangsseitig durch Mischen mit einem TI-Trägersignal ein SI-Signal und durch Mischen mit einem um 90° gegenüber diesem phasenverschobenen TQ-Trägersignal ein SQ-Signal demoduliert werden, **dadurch geken nzeichnet**, daß der Mittelwert der Amplitude des SQ-Signals zum Zeitpunkt des Nulldurchgangs der ansteigenden Flanke des SI-Signals bzw. die Amplitude des SI-Signals zum Zeitpunkt des Nulldurchgangs der abfallenden Flanke des SQ-Signals als Maß für die Abweichung von der Synchronität zwischen dem Empfangsträgers und dem Sendeträger gemessen wird, und daß die Frequenz des Empfangsträgers variiert wird, bis diese Amplitude Null ist.

2. Verfahren nach Anspruch 1, **dadurch gekennzeichnet, daß** der Mittelwert der Amplitude des SI-Signals bzw. des SQ-Signal visuell von einer Anzeigevorrichtung, vor allem vom Bildschirm eines Oszilloskops ermittelt wird, an welche diese Signale angelegt werden.

3. Verfahren nach Anspruch 1, **dadurch gekennzeichnet, daß** der Mittelwert der Amplitude des SI-Signals bzw. des SQ-Signal als Steuergröße in eine Taktrückgewinnungseinrichtung eines QPSK-Demodulators zur Ermittlung eines Startwerts für eine nachgeschaltete Trägerrückge- winnungseinrichtung eingespeist wird.

4. Vorrichtung zur Durchführung des Verfahrens nach einem der Ansprüche 1 bis 3, mit einem QPSK-Demodulator, der eingangsseitig basierend auf einem Oszillator (12) ein TI-Trägersignal und ein um 90° gegenüber diesem phasenverschobenes TQ-Trägersignal erzeugt, die über Mischstufen (10, 11) mit dem empfangenen QPSK-Signal gemischt werden, um ein SI-Signal und ein SQ-Signal zu gewinnen, **gekennze ichnet** durch eine Synchronisiereinrichtung (14) mit einer Triggerschaltung (15), die vom SI-Signal beaufschlagt ist, einer Sample-And-Hold-Schaltung (16), die vom SQ-Signal und vom Ausgangssignal der Triggerschaltung beaufschlagt ist, und einer Mittelwertbildungsschaltung (17), die vom Ausgangssignal der Sample-And-Hold-Schaltung (16) beaufschlagt ist und deren Ausgangssignal als Stellsignal in den Oszillator (12) eingespeist ist.

5. Vorrichtung nach Anspruch 4, **dadurch gekennzeichnet, daß** der Oszillator ein VCO (spannungsgesteuerter Oszillator) ist.

6. Vorrichtung nach Anspruch 4, **dadurch gekennzeichnet, daß** anstelle der Steuerung eines Oszillators zur Trägerrückgewinnung ein analoger oder digitaler Phasenrotator (z.B. basierend auf CORDIC-Algorithmus) mit dem Mittelwert des duch SI getriggerten Signales SQ (oder dem Mittelwert des durch SQ getriggerten Signales SI) gesteuert wird.

## Claims

1. Method of synchronising a reception carrier to a transmission carrier for a dispersed-energy QPSK signal which is transmitted by the transmission carrier as the product of mixing an I signal and an Q signal which is shifted 90° out of phase with the latter, from which signals an SI signal is demodulated at the reception end by mixing with a TI carrier signal and an SQ signal is demodulated by mixing with a TQ carrier signal which is shifted 90° out of phase with the TI carrier signal, **characterised in that** the mean of the amplitude of the SQ signal at the time of the passage through zero of the rising edge of the SI signal or the amplitude of the SI signal at the time of the passage through zero of the decaying edge of the SQ signal is measured as an indication of the deviation from synchronism between the reception carrier and the transmission carrier, and **in that** the frequency of the reception carrier is varied until the said amplitude is zero.

2. Method according to claim 1, **characterised in that** the mean of the amplitude of the SI signal or the SQ signal is determined visually from a display device, and above all from the screen of an oscilloscope, to which these signals are applied.

3. Method according to claim 1, **characterised in that** the mean of the amplitude of the SI signal or SQ signal is fed, as a controlling variable, into a clock recovery arrangement in a QPSK demodulator for determining a starting value for a carrier recovery arrangement connected downstream.

4. Apparatus for performing the method according to one of claims 1 to 3, having a QPSK demodulator the input end of which is based on an oscillator (12) and generates a TI carrier signal and a TQ carrier signal which is shifted 90° out of phase with the latter, which signals are mixed with the received QPSK signal by mixing stages (10, 11) to obtain an SI signal and an SQ signal, **characterised by** a synchronising arrangement (14) having a trigger circuit (15) to which the SI signal is applied, a sample-and-hold circuit (16) to which the SQ signal and the output signal from the trigger circuit are applied, and a mean generating circuit (17) to which the output signal from the sample-and-hold circuit (16) is applied and whose output signal is fed into the oscillator (12) as a setting signal.

5. Apparatus according to claim 4, **characterised in that** the oscillator is a VCO (voltage-controlled oscillator).

6. Apparatus according to claim 4, **characterised in that**, rather than an oscillator being controlled for carrier recovery, an analog or digital phase rotator (e.g. based on the CORDIC algorithm) is controlled by the mean of the SQ signal triggered by SI (or the mean of the SI signal triggered by SQ).

## Revendications

1. Procédé pour synchroniser une porteuse de réception sur une porteuse d'émission d'un signal MDPQ de dispersion d'énergie qui est émis avec la porteuse d'émission en tant que produit composé d'un signal I et d'un signal Q déphasé de 90° par rapport au signal I, desquels au niveau du récepteur sont démodulés un signal SI par mélange avec un signal de porteuse TI et un signal SQ par mélange avec un signal de porteuse TQ déphasé de 90° par rapport à celui-ci, **caractérisé en ce que** la valeur moyenne de l'amplitude du signal SQ au moment du passage à zéro du front montant du signal SI respectivement l'amplitude du signal SI au moment du passage à zéro du front montant du signal SQ est mesurée comme grandeur de référence pour la différence de synchronisme entre la porteuse de réception et la porteuse d'émission, et **en ce que** la fréquence de la porteuse de réception est variée jusqu'à ce que l'amplitude soit nulle.

2. Procédé selon la revendication 1, **caractérisé en ce que** la valeur moyenne de l'amplitude du signal SI respectivement du signal SQ est déterminée visuellement par une installation d'affichage, avant tout par un écran d'un oscilloscope sur lequel ces signaux sont branchés.

3. Procédé selon la revendication 1, **caractérisé en ce que** la valeur moyenne de l'amplitude du signal SI respectivement du signal SQ est fournie à une installation de récupération de synchronisation en tant que grandeur de commande dans une installation de récupération de synchronisation d'un démodulateur MDPQ afin de déterminer une valeur initiale pour une installation de récupération de synchronisation placée en aval.

4. Dispositif pour exécuter le procédé selon une des revendications 1 à 3 avec un démodulateur MDPQ qui, basé en entrée sur un oscillateur (12), génère un signal de porteuse TI et un signal de porteuse TQ déphasé de 90° par rapport à celui-ci qui sont mélangés par des étages mélangeurs (10, 11) avec le signal MDPQ reçu afin d'obtenir un signal SI et un signal SQ, **caractérisé en ce qu'**une installation de synchronisation (14) avec un circuit de déclenchement (15) qui reçoit le signal SI, un circuit échantillonneur-bloqueur (16) qui reçoit le signal SQ et le signal de sortie du circuit de déclenchement, et un circuit de formation de la valeur moyenne (17) qui reçoit le signal de sortie du circuit échantillonneur-bloqueur (16) et dont le signal de sortie est fourni à l'oscillateur (12) en tant que signal de réglage.

5. Dispositif selon la revendication 4 **caractérisé en ce que** l'oscillateur est un VCO (oscillateur commandé par une tension).

6. Dispositif selon la revendication 4, **caractérisé en ce qu'**au lieu de la commande d'un oscillateur pour récupérer la synchronisation un rotateur de phase analogique ou numérique (par exemple basé sur un algorithme CORDIC) est commandé avec la valeur moyenne du signal SQ déclenché par SI (ou la valeur moyenne du signal SI déclenché par SQ).
